# EUROPEAN PATENT SPECIFICATION

(11) **EP 2 209 257 B1**
(45) Date of publication and mention of the grant of the patent: **13.07.2016**
(21) Application number: 09745381.5
(22) Date of filing: 04.03.2009
(51) Int. Cl.: H04L 12/26

(54) **A METHOD AND APPARATUS FOR PROCESSING THE OVERLOADING OF A COMMUNICATION DEVICE**
EIN VERFAHREN UND EINE VORRICHTUNG ZUR VERARBEITUNG DER ÜBERLAST EINES KOMMUNIKATIONSGERÄTES
PROCÉDÉ ET APPAREIL DE TRAITEMENT DE LA SURCHARGE D'UN DISPOSITIF DE COMMUNICATION

(30) Priority: 16.05.2008 CN 200810094794
(43) Date of publication of application: 21.07.2010
(73) Proprietor: Huawei Technologies Co., Ltd., Longgang District Shenzhen, Guangdong 518129 (CN)
(72) Inventor: HE, Yajun, Longgang District 518129 Shenzhen (CN); CAO, Haiquan, Longgang District 518129 Shenzhen (CN)
(74) Representative: Kreuz, Georg Maria
(86) International application number: PCT/CN2009/070637
(87) International publication number: WO 2009/137997

(56) References cited:
- WO-A1-02/098076
- CN-A- 1 571 538
- CN-A- 1 835 632
- CN-A- 1 859 710
- US-A1- 2002 166 117
- US-A1- 2005 185 607
- US-A1- 2008 295 092
- AMBROSOLI L ET AL: "NETWORK MANAGEMENT FOR MULTI-SERVICE METROPOLITAN SOLUTIONS" ELECTRICAL COMMUNICATION, ALCATEL. BRUSSELS, BE, vol. 2002, no. 1, 1 January 2002 (2002-01-01), pages 33-39, XP001089077 ISSN: 0013-4252

## Description

### FIELD OF THE INVENTION

The present invention relates to communication technologies, and in particular, to a method and an apparatus for handling overload of communication equipment.

### BACKGROUND OF THE INVENTION

With the development of the communication industry, the service providers provide more and more diversified services, and the competition between service providers is more intense, putting service providers under more and more cost pressure. When buying communication equipment, a service provider needs to purchase an ordinary license of a certain capacity. The operation of the equipment is controlled by the ordinary license. Once the service capacity exceeds the capacity authorized by the ordinary license, the equipment cannot access new services.

In the operation process, however, on the site of emergent events such as concerts, sports meeting, and railway station at peak time of transport, people gather together densely, and the service capacity tends to exceed the capacity authorized by the ordinary license. Once the service capacity exceeds the capacity authorized by the ordinary license, the access to new services is rejected. The solution to coping with such emergencies in the prior art is to purchase ordinary licenses of a higher capacity.

In the process of developing the present invention, the inventor finds at least these defects in the prior art: Ordinary licenses of a higher capacity bring higher costs, but the emergencies do not occur frequently. The purchased ordinary licenses of a higher capacity are futile in the non-emergency period, and increase the operation costs.

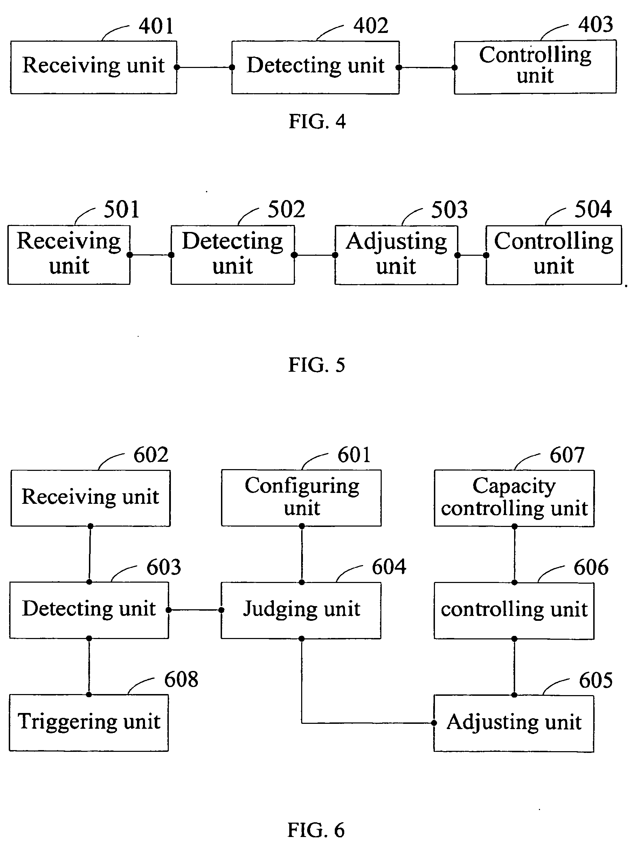

US 2005/185607 A1 discloses a method that the network supervision and management device 156 determines whether the current capacity of the base station is sufficient given a change in utilized capacity. If a determination by the network supervision and management device 156 shows that the current capacity is not enough, a change to the client access list of the base station may be made, according to paragraph 0032 and figure 4.

D2 (AMBROSOLI L ET AL:"NETWORK MANAGEMENT FOR MULTISERVICE METROPOLITAN SOLUTIONS" ELECTRICAL COMMUNICATION, ALCATEL. BRUSSELS, BE, vol. 2002, no.1, 1 January 2002 (2002-01-01), pages 33-39, XP001089077 ISSN: 0013-4252) discloses a method that network management for multi-service metropolitan solutions. Using the Alcatel 1355 BonD's bandwidth on demand functionality, the customer can request bandwidth when and where it is needed. BonD functionality checks the administrative feasibility of meeting the customer's request before forwarding it to the appropriate network management system (see figure 6). A crucial aspect is the conversion that BonD undertakes before forwarding the customer request, according to second paragraph in page 39 of D2.

US 20080295092 A1 discloses techniques for automatically installing an application on a device on a network include sending, to a server, data indicating device resources on the device. The device requests a database application from the server. The device downloads from the server an initial customized value for a configuration parameter based on the device resources and the database application. The device also downloads the database application. The device installs the database application with the initial customized value for the configuration parameter.

### SUMMARY OF THE INVENTION

The different aspects of the present invention provide a method a computer program product and an apparatus for handling overload of communication equipment in accordance with the claims.

In the different aspects of the present invention, even if overload is detected, the equipment can still operate under the control of an overload license controlling item. Therefore, without the need of purchasing ordinary licenses of a higher capacity to cope with emergencies, the service provider can reduce the operation cost, ensure the user to access the equipment even if the equipment is in overloaded operation, cope with the traffic peak smoothly, and improve the user experience.

### BRIEF DESCRIPTION OF THE DRAWINGS

FIG. 1 is a flowchart of a method for handling overload of communication equipment according to a first embodiment of the present invention;
FIG. 2 is a flowchart of a method for handling overload of communication equipment according to a second embodiment of the present invention;
FIG. 3 is a flowchart of a method for handling overload of communication equipment according to a third embodiment of the present invention;
FIG. 4 shows a structure of an apparatus for handling overload of communication equipment according to a first embodiment of the present invention;
FIG. 5 shows a structure of an apparatus for handling overload of communication equipment according to a second embodiment of the present invention; and
FIG. 6 shows a structure of an apparatus for handling overload of communication equipment according to a third embodiment of the present invention.

### DETAILED DESCRIPTION OF THE EMBODIMENTS

To make the technical solution, objectives and merits of the present invention clearer, the following describes the embodiments of the present invention in detail with reference to the accompanying drawings.

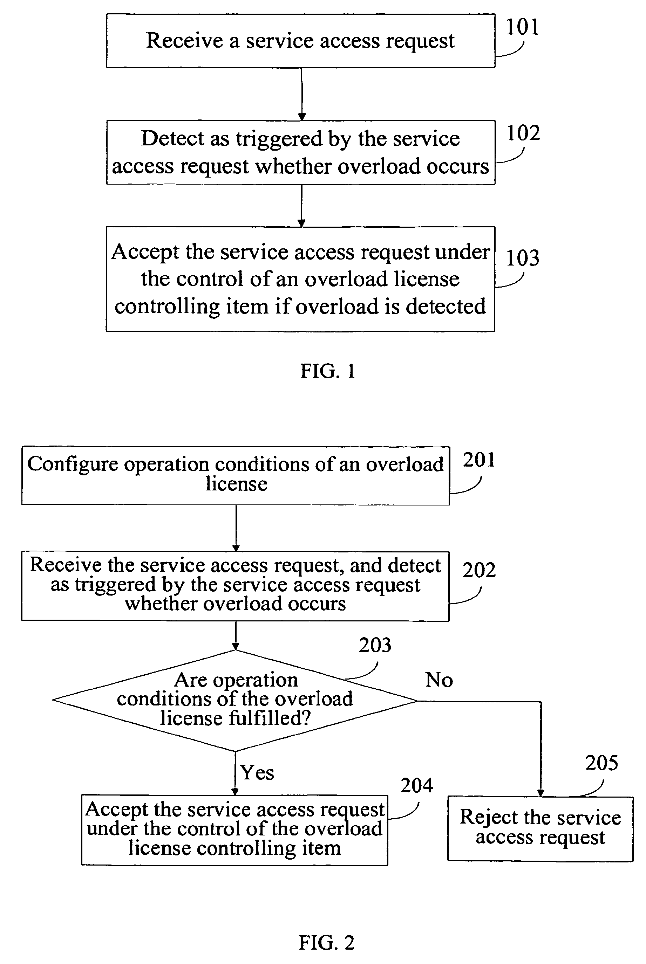

FIG. 1 is a flowchart of a method for handling overload of communication equipment according to a first embodiment of the present invention. The method includes:
Step 101: A service access request is received.
   When the communication equipment is in operation, the communication equipment receives the service access request from other communication equipment or communication terminals.
Step 102: A judgment is made, as triggered by the service access request, about whether overload occurs.
   The capacity of the communication equipment is constant. Therefore, after the service access request is received, it is necessary to detect whether overload occurs, namely, detect whether any vacant capacity of ordinary licenses is still available for accepting the service access request. The overload detection is to directly detect whether the current service capacity exceeds the capacity of the ordinary license. If the current service capacity exceeds the capacity of the ordinary license, the equipment is overloaded. Specifically, this step is performed after the service access request is received. An ordinary license refers to the license when the equipment operates normally, and it may be an equipment license and/or a network license.
Step 103: If overload is detected, the service access request is accepted under the control of an overload license controlling item.

If overload is detected, the service access request may be accepted under the control of the overload license controlling item, namely, the overloaded equipment may still operate under the control of the overload license controlling item. Therefore, the service is normally accessible when the capacity of the equipment exceeds the capacity of the ordinary license. In this embodiment, the overload license controlling item exercises control again on the basis of the existing ordinary license of the equipment. The overload license controlling item is triggered only when the service capacity exceeds the existing capacity of the ordinary license of the equipment. The overload license does not involve the specific controlling item of the ordinary license. The overload license has an independent overload license controlling item. The overload license controlling item may be the count of overload, the number of peak days of the service, the number of service peaks, or overload time. If no overload is detected, the normal service process applies, and the user is allowed to access the equipment.

The overload count is the total count of any of the ordinary licenses exceeding the upper threshold; once any of the ordinary licenses of the equipment exceeds the upper threshold, the overload count increases by 1. In this case, the overload license controlling item exercises control over the total overload count of the ordinary licenses of the equipment in the service operation process. The capacity of the overload license controlling item decreases with the increase of the overload count. The number of peak days of the service is a sum of the overload days. Once overload occurs in a day, the number of peak days of the service increases by 1. In this case, the overload license controlling item exercises control over the total number of days in which the service peak occurs in the service operation process. The capacity of the overload license controlling item decreases with the increase of the number of overload days. Number of service peaks: If overload occurs continuously in a period (several hours or days), the period counts as a service peak. In this case, the overload license controlling item exercises control over the total number of service peaks in the service operation process. The capacity of the overload license controlling item decreases with the increase of the number of service peaks. Overload time refers to duration of overload. This controlling item exercises control over the overload time in the service operation process. In this case, the capacity of the overload license controlling item, namely, the overload time, decreases with the increase of the overload count.

The overload license controlling item is preset. When the service provider purchases the ordinary licenses of the equipment, the service provider may select overload licenses as required. An overload license is bound to an ordinary license which is released in the settings, or the overload license is released in the equipment separately.

In this embodiment, even if overload is detected, the equipment can still operate under the control of an overload license controlling item. Therefore, without the need of purchasing ordinary licenses of a higher capacity to cope with emergencies, the service provider can reduce the operation cost, ensure the user to access the equipment even if the equipment is in overloaded operation, cope with the traffic peak smoothly, and improve the user experience.

Generally, the configuration parameters are configured according to the capacity of the ordinary licenses. Therefore, when the equipment is in overloaded operation, the configuration parameters of the equipment may need to be adjusted. Before the equipment operates in the overload mode under the control of an overload license controlling item, the method may further include:
adjusting the configuration parameters to meet the requirements of the service access request.

The configuration parameters may be adjusted in this way: increasing the access to Packet Data Protocol (PDP) contexts, configuring more Virtual Private Networks (VPNs), increasing the number of User Equipments (UEs) that access a cell, adjusting the power of the cell, and so on. The embodiments of the present invention do not specify the method of adjusting the configuration parameters. Through adjustment of the configuration parameters, the adjusted configuration parameters meet the requirements of service access requests, namely, meet the requirements of overloaded operation. Therefore, the equipment in overloaded operation can provide up-to-standard services, and the user experience is improved.

FIG. 2 is a flowchart of a method for handling overload of communication equipment according to a second embodiment of the present invention. The method includes:
Step 201: The operation conditions of an overload license is configured.
   Although the equipment has released the overload license, in order to reduce the operation cost, the operation conditions of an overload license may be set. The specific settings may be: whether to enable an overload license, time segment of enabling the overload license, threshold of enabling the overload license. In this way, the overload license is enabled only in a specific time segment and/or when a specific threshold is reached.
Step 202: A service access request is received, and overload is detected as triggered by the service access request. In this embodiment, it is assumed that overload is detected. In the case that no overload is detected, the normal service process applies.
Step 203: A judgment is made about whether the operation conditions of the overload license are fulfilled. If the operation conditions are fulfilled, the process proceeds to step 204; otherwise, the process proceeds to step 205, where the overload license corresponds to the overload license controlling item.

Specifically, a judgment is made about whether an overload license is enabled. If an overload license is enabled, judge whether the enabling time segment or the enabling threshold is fulfilled. If overload occurs when the operation conditions of the overload license are not fulfilled, the service access request is rejected.

Further, the overload license controlling item has a specific capacity. Therefore, after it is determined that an overload license controlling item exists, a further judgment may be made about whether the overload license controlling item has an overload license controlling item capacity. If the overload license controlling item has an overload license controlling item capacity, the subsequent process continues; otherwise, the service access request is rejected.

The overload license controlling item capacity may vary with the overload license controlling item. When the overload license is overload count, the corresponding overload license controlling item capacity is the remaining overload count; when the overload license is overload time, the corresponding overload license controlling item capacity is the remaining overload time.

Step 204: The service access request is accepted under the control of the overload license controlling item. The process ends.

Specifically, in this step, the overloaded operation under the control of the overload license controlling item may be accepting of the service access request.

When the overload license controlling item capacity is constant, the capacity of the license controlling item decreases once the overload license controlling item is applied to exercise control. When the overload license is overload count, the remaining overload count decreases once overload occurs. When the overload license is the number of peak days of the service, the remaining number of peak days of the service decreases once overload occurs in a day. When the overload license is the number of service peaks, the remaining number of service peaks decreases once overload occurs in a time segment. When the overload license is overload time, the remaining overload time decreases once overload occurs. When the overload license controlling item capacity is zero, no more overload is allowed. In this case, if overload occurs again, the service access request is rejected.

Step 205: The service access request is rejected.

In this embodiment, after overload is detected, a judgment is made about whether an overload license controlling item is enabled. The equipment is allowed to operate in the overloaded mode under the control of an overload license controlling item only if the overload license controlling item is enabled. In this way, only the equipment that meets the operation conditions of the overload license can operate in the overloaded mode, thus being conducive to normal operation of the equipment. Meanwhile, when the operation conditions of the overload license are fulfilled, even if overload is detected, the equipment can still operate in the overloaded mode under the control of the overload license controlling item. Therefore, without the need of purchasing ordinary licenses of a higher capacity to cope with emergencies, the service provider can reduce the operation cost, ensure the user to access the equipment even if the equipment is in overloaded operation, cope with the traffic peak smoothly, and improve the user experience.

In order to enable the equipment user to be aware of the overload, a license overload alarm may be triggered when overload is detected. The content of the alarm may be information indicating occurrence of overload. When the overload license controlling item capacity is limited, the equipment may display the consumed overload license controlling item capacity and the remaining overload license controlling item capacity, and therefore, the user may add the overload license controlling item capacity in time, and the equipment can operate normally.

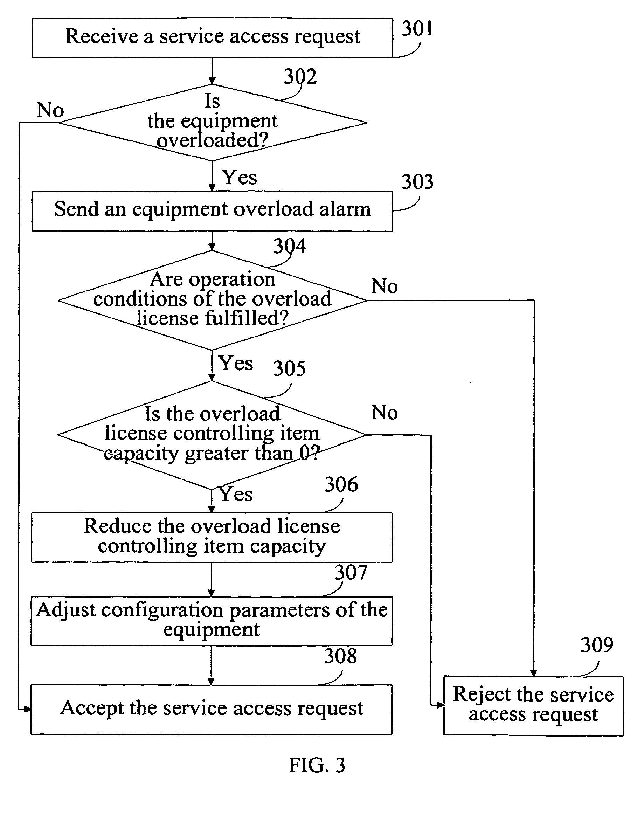

FIG. 3 is a flowchart of a method for handling overload of communication equipment according to a third embodiment of the present invention. The method includes:
Step 301: A service access request is received.
Step 302: A judgment is made about whether the equipment is overloaded. If the equipment is not overloaded, the process proceeds to step 308; if the equipment is overloaded, the process proceeds to step 303.
Step 303: An equipment overload alarm is reported.
   The equipment overload alarm is an alert to the user. This embodiment does not specify the mode or content of the alarm. Any alarm capable of alerting the user is appropriate for implementing the present invention.
Step 304: A judgment is made about whether the operation conditions of the overload license controlling item are fulfilled. If the operation conditions are fulfilled, the process proceeds to step 305; otherwise, the process proceeds to step 309.
   The operation conditions of the overload license controlling item may be configured in advance.
Step 305: A judgment is made about whether the overload license controlling item capacity is greater than 0, namely, judge whether any overload license is available; if the capacity of the overload license controlling item is 0, the process proceeds to step 309; if the overload license controlling item capacity is greater than 0, the process proceeds to step 306.
   The overload license controlling item capacity may be overload count, number of peak days of the service, number of service peaks, or overload time.
Step 306: The overload license controlling item capacity is reduced. That is, the remaining overload license controlling item capacity is reduced by 1.
   If the overload license controlling item is an overload time, this step needs to be performed after completion of the overloaded operation because the overloaded operation time is not known until the overloaded operation is completed.
Step 307: The configuration parameters of the equipment are modified to meet the requirement of increased capacity at the time of accepting the service access request.
   This step is not mandatory. If the configuration parameters of the equipment can meet the requirement of overloaded operation, this step is not required.
Step 308: The service access request is accepted. The process ends.
   In this step, the service access request is accepted under the control of the overload license controlling item.
Step 309: The service access request is rejected. The process ends.

In this embodiment, even if overload is detected, the equipment can still operate under the control of an overload license controlling item. Therefore, without the need of purchasing ordinary licenses of a higher capacity to cope with emergencies, the service provider can reduce the operation cost, ensure the user to access the equipment even if the equipment is in overloaded operation, cope with the traffic peak smoothly, and improve the user experience. Meanwhile, a judgment may be made about whether the operation conditions of the overload license are fulfilled, and the overload license is enabled only when the operation conditions of the overload license are fulfilled, which is conducive to controlling the operation cost.

An apparatus for handling overload of communication equipment is provided herein. The apparatus may be set in communication equipment or network management equipment.

FIG. 4 shows a structure of an apparatus for handling overload of communication equipment according to a first embodiment of the present invention. The apparatus includes:
a receiving unit 401, configured to receive a service access request;
a detecting unit 402, configured to detect whether overload occurs after the receiving unit 401 receives the service access request; and
a controlling unit 403, configured to accept the service access request under the control of an overload license controlling item if the detecting unit 401 detects overload.

With the apparatus for handling overload of communication equipment in this embodiment, even if overload is detected, the equipment can still operate under the control of an overload license controlling item. Therefore, without the need of purchasing ordinary licenses of a higher capacity to cope with emergencies, the service provider can reduce the operation cost, ensure the user to access the equipment even if the equipment is in overloaded operation, cope with the traffic peak smoothly, and improve the user experience.

When the communication equipment receives a service access request, as triggered by the service access request, a judgment may be made about whether overload occurs. If overload occurs, the communication equipment can operate in the overloaded mode under the control of an overload license controlling item.

If the configuration parameters of the communication equipment are set according to the capacity of an ordinary license, the configuration parameters need to be adjusted before overloaded operation to make the configuration parameters meet the requirements of overloaded operation. In this case, the apparatus for handling overload of communication equipment in this embodiment may further include:
an adjusting unit, configured to: before the controlling unit 403 accepts the service access request under the control of the overload license controlling item, adjust the configuration parameters to meet the requirements of the service access request.

After the adjusting unit adjusts the configuration parameters, the communication equipment can operate normally after accepting the service access request, and the user is ensured to access the communication equipment normally.

FIG. 5 shows a structure of an apparatus for handling overload of communication equipment according to a second embodiment of the present invention. The apparatus includes:
a receiving unit 501, configured to receive a service access request;
a detecting unit 502, configured to detect whether overload occurs after the receiving unit 501 receives the service access request;
an adjusting unit 503, configured to adjust the configuration parameters to fulfill the requirements of the service access request after the detecting unit 502 detects overload; and
a controlling unit 504, configured to accept the service access request under the control of an overload license controlling item after the adjusting unit 503 adjusts the configuration parameters.

With the apparatus for handling overload of communication equipment in this embodiment, an overload license controlling item is configured. Even if overload is detected, the equipment can still operate under the control of the overload license controlling item. Therefore, without the need of purchasing ordinary licenses of a higher capacity to cope with emergencies, the service provider can reduce the operation cost. Meanwhile, the configuration parameters may be adjusted to ensure the user to access the equipment even if the equipment is in overloaded operation, cope with the traffic peak smoothly, and improve the user experience.

Further, in order to reduce the operation cost, the operation conditions of the overload license may be configured. In this case, an apparatus for handling overload of communication equipment in an embodiment of the present invention may further include:
a configuring unit, configured to configure operation conditions of an overload license.

The apparatus for handling overload of communication equipment in this embodiment may further include:
a judging unit, configured to judge whether the operation conditions of the overload license are fulfilled after the detecting unit 502 detects the overload.

In this case, the controlling unit 402 or controlling unit 502 is configured to control the equipment to operate under the control of the overload license controlling item only if the judging unit determines that the operation conditions of the overload license are fulfilled.

The judging unit judges whether the operation conditions of the overload license are fulfilled, and the equipment operates under the control of the overload license controlling item only if the operation conditions of the overload license are fulfilled. In this way, only the equipment that meets the operation conditions of the overload license can operate in an overloaded mode, which is conducive to normal operation of the equipment and controlling the operation cost.

Further, the overload license controlling item has a specific capacity. The judging unit may further judge whether the overload license controlling item has an overload license controlling item capacity after determining that the operation conditions of the overload license are fulfilled.

In this case, the controlling unit 402 or controlling unit 502 is configured to control the equipment to operate under the control of the overload license controlling item only if the judging unit determines that the overload license controlling item has an overload license controlling item capacity.

Through the judging unit that judges the capacity of the overload license controlling item, it is ensured that the equipment operates in the overloaded mode only if the overload license controlling item has a capacity, which is conducive to normal operation of the equipment.

FIG. 6 shows a structure of an apparatus for handling overload of communication equipment according to a third embodiment of the present invention. The apparatus includes:
a configuring unit 601, configured to configure operation conditions of an overload license;
a receiving unit 602, configured to receive a service access request;
a detecting unit 603, configured to detect whether overload occurs after the receiving unit 602 receives the service access request;
a judging unit 604, configured to judge whether the overload license operation conditions configured by the configuring unit 601 are fulfilled after the detecting unit 603 detects the overload;
an adjusting unit 605, configured to: after the judging unit determines that the overload license operation conditions are fulfilled, adjust the configuration parameters to meet the requirements of the service access request;
a controlling unit 606, configured to accept the service access request under the control of an overload license controlling item after the adjusting unit 605 adjusts the configuration parameters;
a capacity controlling unit 607, configured to reduce the overload license controlling item capacity of the overload license controlling item after the controlling unit 606 accepts the service access request under the control of the overload license controlling item; and
a triggering unit 608, configured to trigger a license overload alarm after the detecting unit 603 detects the overload.

The triggering unit 608 is optional.

With the apparatus for handling overload of communication equipment in this embodiment, even if overload is detected, the equipment can still operate under the control of an overload license controlling item. Therefore, without the need of purchasing ordinary licenses of a higher capacity to cope with emergencies, the service provider can reduce the operation cost, ensure the user to access the equipment even if the equipment is in overloaded operation, cope with the traffic peak smoothly, and improve the user experience. Meanwhile, the overload license operation conditions may be configured and a judgment may be made about whether the overload license operation conditions are fulfilled. The overload license is enabled only when the overload license operation conditions are fulfilled, which is conducive to controlling the operation cost.

Persons of ordinary skill in the art may understand that all or a part of the steps of the method according to the embodiments of the present invention may be implemented by a program instructing relevant hardware. The program may be stored in a computer readable storage medium. When being executed, the program performs at least the following steps:
receiving a service access request;
detecting, as triggered by the service access request, whether overload occurs; and
accepting the service access request under the control of an overload license controlling item if the overload is detected.

The above storage medium may be a Read-Only Memory (ROM), a magnetic disk or a Compact Disk Read-Only Memory (CD-ROM).

The above descriptions elaborate a method and an apparatus for handling overload of communication equipment according to embodiments of the present invention. The embodiments above are intended only to facilitate the understanding of the methods and ideas of the present invention. Those of ordinary skill in the art can make variations and modifications to the present invention in terms of specific implementations and application scopes according to the ideas of the present invention. Therefore, the specification shall not be construed as limitations to the present invention.

## Claims

1. A method for handling overload of communication equipment, comprising:
receiving (101), by the communication equipment, a service access request;
detecting (102), by the communication equipment, as triggered by the service access request, whether overload occurs, wherein the detecting whether overload occurs comprise:
detecting, by the communication equipment, whether any vacant capacity of ordinary licenses is still available for accepting the service access request; and
accepting (103), by the communication equipment, the service access request under the control of a preset overload license controlling item if the overload is detected, wherein the preset overload license controlling item is a count of overload, a number of peak days of the service, a number of service peaks, or overload time.

2. The method according to claim 1, wherein: before accepting the service access request under the control of the overload license controlling item, the method further comprises:
adjusting, by the communication equipment, configuration parameters to meet requirements of the service access request.

3. The method according to claim 1, wherein: before accepting the service access request under the control of the overload license controlling item, the method further comprises:
judging, by the communication equipment, whether the communication equipment fulfills operation conditions of an overload license, wherein the overload license corresponds to the preset overload license controlling item;
wherein the accepting the service access request under the control of the preset overload license controlling item comprises:
accepting the service access request under the control of the preset overload license controlling item if the communication equipment fulfills the operation conditions.

4. The method according to claim 3, wherein: before accepting the service access request under the control of the preset overload license controlling item if the communication equipment fulfills the operation conditions, the method further comprises:
judging, by the communication equipment, whether the preset overload license controlling item has an overload license controlling item capacity;
wherein the accepting the service access request under the control of the preset overload license controlling item if the communication equipment fulfills the operation conditions comprises:
accepting the service access request under the control of the overload license controlling item if the communication equipment fulfills the operation conditions and the preset overload license controlling item has the overload license controlling item capacity.

5. The method according to claim 4, wherein: after accepting the service access request under the control of the preset overload license controlling item if the communication equipment fulfills the operation conditions and the preset overload license controlling item has the overload license controlling item capacity, the method further comprises:
decreasing, by the communication equipment, the overload license controlling item capacity of the preset overload license controlling item.

6. The method according to any one of claims 3-5, wherein: before judging whether the communication equipment fulfills the operation conditions of the overload license, the method further comprises:
configuring, by the communication equipment, the operation conditions.

7. The method according to any one of claims 1-5, wherein: if the overload is detected, the method further comprises:
triggering, by the communication equipment, an overload license alarm.

8. A computer program product, wherein:
the computer program product comprises computer program codes; when being executed by a computer, the computer program codes cause the computer to perform all steps in any one of claims 1-7.

9. An apparatus for handling overload of communication equipment, comprising:
a receiving unit (401), configured to receive a service access request;
a detecting unit (402), configured to detect whether overload occurs after the receiving unit (401) receives the service access request; and
a controlling unit (403), configured to accept the service access request under the control of a preset overload license controlling item if the detecting unit (402) detects the overload, wherein the preset overload license controlling item is a count of overload, a number of peak days of the service, a number of service peaks, or overload time;
wherein the detecting unit (402) configured to detect whether overload occurs comprise:
configured to detect whether any vacant capacity of ordinary licenses is still available for accepting the service access request.

10. The apparatus according to claim 9, further comprising:
an adjusting unit (503), configured to adjust configuration parameters to fulfill requirements of the service access request after the detecting unit (502) detects the overload;
wherein the controlling unit (504) is configured to accept the service access request under the control of the preset overload license controlling item after the adjusting unit (503) adjusts the configuration parameters.

11. The apparatus according to claim 9, further comprising:
a judging unit, configured to judge whether the communication equipment fulfills operation conditions of an overload license after the detecting unit detects the overload, wherein the overload license corresponds to the preset overload license controlling item;
wherein the controlling unit is configured to accept the service access request under the control of the preset overload license controlling item if the judging unit determines that the communication equipment fulfills the operation conditions of the overload license.

12. The apparatus according to claim 11, wherein:
the judging unit is further configured to judge whether the preset overload license controlling item has an overload license controlling item capacity if determining that the communication equipment fulfills the operation conditions; and
the controlling unit is configured to accept the service access request under the control of the preset overload license controlling item if the judging unit determines that the preset overload license controlling item has the overload license controlling item capacity.

13. The apparatus according to claim 12, further comprising:
a capacity controlling unit (607), configured to reduce the overload license controlling item capacity of the preset overload license controlling item after the controlling unit (606) accepts the service access request under the control of the preset overload license controlling item.

14. The apparatus according to any one of claims 11-13, further comprising:
a configuring unit (601), configured to configure the operation conditions of the overload license before the judging unit (604) judges whether the communication equipment fulfills the operation conditions.

15. The apparatus according to any one of claims 9-13, further comprising:
a triggering unit (608), configured to trigger a license overload alarm after the detecting unit (603) detects the overload.

## Patentansprüche

1. Verfahren zum Verarbeiten einer Überlast einer Kommunikationseinrichtung, das umfasst:
Empfangen (101) einer Dienstzugriffsanforderung durch die Kommunikationseinrichtung;
Detektieren (102) durch die Kommunikationseinrichtung, ausgelöst durch die Dienstzugriffsanforderung, ob eine Überlast auftritt, wobei das Detektieren, ob eine Überlast auftritt, umfasst:
Detektieren durch die Kommunikationseinrichtung, ob noch eine freie Kapazität von regulären Lizenzen zum Annehmen der Dienstzugriffsanforderung zur Verfügung steht; und
Annehmen (103) der Dienstzugriffsanforderung durch die Kommunikationseinrichtung unter der Steuerung eines voreingestellten Überlastlizenz-Steuerelements, falls die Überlast detektiert wird, wobei das voreingestellte Überlastlizenz-Steuerelement eine Zählung der Überlast, eine Anzahl von Spitzentagen des Dienstes, eine Anzahl von Dienstspitzen oder eine Überlastzeit ist.

2. Verfahren nach Anspruch 1, wobei: vor dem Annehmen der Dienstzugriffsanforderung unter der Steuerung des Überlastlizenz-Steuerelements das Verfahren ferner umfasst: Einstellen von Konfigurationsparametern durch die Kommunikationseinrichtung, um Erfordernisse der Dienstzugriffsanforderung zu erfüllen.

3. Verfahren nach Anspruch 1, wobei: vor dem Annehmen der Dienstzugriffsanforderung unter der Steuerung des Überlastlizenz-Steuerelements das Verfahren ferner umfasst:
Beurteilen durch die Kommunikationseinrichtung, ob die Kommunikationseinrichtung Betriebsbedingungen einer Überlastlizenz erfüllt, wobei die Überlastlizenz dem voreingestellten Überlastlizenz-Steuerelement entspricht;
wobei das Annehmen der Dienstzugriffsanforderung unter der Steuerung des voreingestellten Überlastlizenz-Steuerelements umfasst:
Annehmen der Dienstzugriffsanforderung unter der Steuerung des voreingestellten Überlastlizenz-Steuerelements, falls die Kommunikationseinrichtung die Betriebsbedingungen erfüllt.

4. Verfahren nach Anspruch 3, wobei: vor dem Annehmen der Dienstzugriffsanforderung unter der Steuerung des Überlastlizenz-Steuerelements, falls die Kommunikationseinrichtung die Betriebsbedingungen erfüllt, das Verfahren ferner umfasst:
Beurteilen durch die Kommunikationseinrichtung, ob das voreingestellte Überlastlizenz-Steuerelement eine Überlastlizenz-Steuerelement-Kapazität aufweist;
wobei das Annehmen der Dienstzugriffsanforderung unter der Steuerung des voreingestellten Überlastlizenz-Steuerelements, falls die Kommunikationseinrichtung die Betriebsbedingungen erfüllt, umfasst:
Annehmen der Dienstzugriffsanforderung unter der Steuerung des Überlastlizenz-Steuerelements, falls die Kommunikationseinrichtung die Betriebsbedingungen erfüllt und das voreingestellte Überlastlizenz-Steuerelement die Überlastlizenz-Steuerelement-Kapazität aufweist.

5. Verfahren nach Anspruch 4, wobei: nach dem Annehmen der Dienstzugriffsanforderung unter der Steuerung des voreingestellten Überlastlizenz-Steuerelements, falls die Kommunikationseinrichtung die Betriebsbedingungen erfüllt und das voreingestellte Überlastlizenz-Steuerelement die Überlastlizenz-Steuerelement-Kapazität aufweist, das Verfahren ferner umfasst:
Verringern der Überlastlizenz-Steuerelement-Kapazität des voreingestellten Überlastlizenz-Steuerelements durch die Kommunikationseinrichtung.

6. Verfahren nach einem der Ansprüche 3-5, wobei: vor dem Beurteilen, ob die Kommunikationseinrichtung die Betriebsbedingungen der Überlastlizenz erfüllt, das Verfahren ferner umfasst:
Konfigurieren der Betriebsbedingungen durch die Kommunikationseinrichtung.

7. Verfahren nach einem der Ansprüche 1-5, wobei: falls die Überlast detektiert wird, das Verfahren ferner umfasst:
Auslösen eines Überlastlizenzalarms durch die Kommunikationseinrichtung.

8. Computerprogrammprodukt, wobei:
das Computerprogrammprodukt Computerprogrammcodes umfasst; wobei bei Ausführung durch einen Computer die Computerprogrammcodes bewirken, dass der Computer sämtliche Schritte nach einem der Ansprüche 1-7 durchführt.

9. Vorrichtung zum Verarbeiten einer Überlast einer Kommunikationseinrichtung, die umfasst:
eine Empfangseinheit (401), die so ausgelegt ist, dass sie eine Dienstzugriffsanforderung empfängt;
eine Detektiereinheit (402), die so ausgelegt ist, dass sie detektiert, ob eine Überlast auftritt, nachdem die Empfangseinheit (401) die Dienstzuguffsanforderung empfangen hat; und
eine Steuereinheit (403), die so ausgelegt ist, dass sie die Dienstzugriffsanforderung unter der Steuerung eines voreingestellten Überlastlizenz-Steuerelements annimmt,
falls die Detektiereinheit (402) die Überlast detektiert, wobei das voreingestellte Überlastlizenz-Steuerelement eine Zählung der Überlast, eine Anzahl von Spitzentagen des Dienstes, eine Anzahl von Dienstspitzen oder eine Überlastzeit ist;
wobei die Detektiereinheit (402), die so ausgelegt ist, dass sie detektiert, ob eine Überlast auftritt, umfasst:
so ausgelegt zu sein, dass sie detektiert, ob noch eine freie Kapazität von regulären Lizenzen zum Annehmen der Dienstzugriffsanforderung zur Verfügung steht.

10. Vorrichtung nach Anspruch 9, die ferner umfasst:
eine Einstelleinheit (503), die so ausgelegt ist, dass sie Konfigurationsparameter einstellt, um Erfordernisse der Dienstzugriffsanforderung zu erfüllen, nachdem die Detektiereinheit (502) die Überlast detektiert hat;
wobei die Steuereinheit (504) so ausgelegt ist, dass sie die Dienstzugriffsanforderung unter der Steuerung des voreingestellten Überlastlizenz-Steuerelements annimmt, nachdem die Einstelleinheit (503) die Konfigurationsparameter eingestellt hat.

11. Vorrichtung nach Anspruch 9, die ferner umfasst:
eine Beurteilungseinheit, die so ausgelegt ist, dass sie beurteilt, ob die Kommunikationseinrichtung Betriebsbedingungen einer Überlastlizenz erfüllt, nachdem die Detektiereinheit die Überlast detektiert hat, wobei die Überlastlizenz dem voreingestellten Überlastlizenz-Steuerelement entspricht;
wobei die Steuereinheit so ausgelegt ist, dass sie die Dienstzugriffsanforderung unter der Steuerung des voreingestellten Überlastlizenz-Steuerelements annimmt, falls die Beurteilungseinheit ermittelt, dass die Kommunikationseinrichtung die Betriebsbedingungen der Überlastlizenz erfüllt.

12. Vorrichtung nach Anspruch 11, wobei:
die Beurteilungseinheit ferner so ausgelegt ist, dass sie beurteilt, ob das voreingestellte Überlastlizenz-Steuerelement eine Überlastlizenz-Steuerelement-Kapazität aufweist, falls sie ermittelt, dass die Kommunikationseinrichtung die Betriebsbedingungen erfüllt; und
die Steuereinheit so ausgelegt ist, dass sie die Dienstzugriffsanforderung unter der Steuerung des voreingestellten Überlastlizenz-Steuerelements annimmt, falls die Beurteilungseinheit ermittelt, dass das voreingestellte Überlastlizenz-Steuerelement die Überlastlizenz-Steuerelement-Kapazität aufweist.

13. Vorrichtung nach Anspruch 12, die ferner umfasst:
eine Kapazitätssteuereinheit (607), die so ausgelegt ist, dass sie die Überlastlizenz-Steuerelement-Kapazität des voreingestellten Überlastlizenz-Steuerelements verringern, nachdem die Steuereinheit (606) die Dienstzugriffsanforderung unter der Steuerung des voreingestellten Überlastlizenz-Steuerelements angenommen hat.

14. Vorrichtung nach einem der Ansprüche 11-13, die ferner umfasst:
eine Konfiguriereinheit (601), die so ausgelegt ist, dass sie die Betriebsbedingungen der Überlastlizenz konfiguriert, bevor die Beurteilungseinheit (604) beurteilt, ob die Kommunikationseinrichtung die Betriebsbedingungen erfüllt.

15. Vorrichtung nach einem der Ansprüche 9-13, die ferner umfasst:
eine Auslöseeinheit (608), die so ausgelegt ist, dass sie einen Lizenzüberlastalarm auslöst, nachdem die Detektiereinheit (603) die Überlast detektiert hat.

## Revendications

1. Procédé de gestion de la surcharge d'un équipement de communication, comprenant :
la réception (101), par l'équipement de communication, d'une demande d'accès à un service ;
la détection (102), par l'équipement de communication, par déclenchement par la demande d'accès à un service, du fait de savoir si une surcharge se produit, dans lequel la détection du fait de savoir si une surcharge se produit comprend :
la détection, par l'équipement de communication, du fait de savoir si une éventuelle capacité libre de licences ordinaires est encore disponible pour accepter la demande d'accès à un service ; et
l'acceptation (103), par l'équipement de communication, de la demande d'accès à un service sous le contrôle d'un élément prédéfini de contrôle de licence de surcharge si la surcharge est détectée, dans lequel l'élément prédéfini de contrôle de licence de surcharge est un compte de surcharge, un nombre de jours de pointe du service, un nombre de pics de service, ou un temps de surcharge.

2. Procédé selon la revendication 1, dans lequel : avant d'accepter la demande d'accès à un service sous le contrôle de l'élément de contrôle de licence de surcharge, le procédé comprend en outre :
l'ajustement, par l'équipement de communication, de paramètres de configuration afin de respecter les exigences de la demande d'accès à un service.

3. Procédé selon la revendication 1, dans lequel : avant d'accepter la demande d'accès à un service sous le contrôle de l'élément de contrôle de licence de surcharge, le procédé comprend en outre :
le jugement, par l'équipement de communication, du fait de savoir si l'équipement de communication remplit des conditions de fonctionnement d'une licence de surcharge, dans lequel la licence de surcharge correspond à l'élément prédéfini de contrôle de licence de surcharge ;
dans lequel l'acceptation de la demande d'accès à un service sous le contrôle de l'élément prédéfini de contrôle de licence de surcharge comprend :
l'acceptation de la demande d'accès à un service sous le contrôle de l'élément prédéfini de contrôle de licence de surcharge si l'équipement de communication remplit les conditions de fonctionnement.

4. Procédé selon la revendication 3, dans lequel : avant d'accepter la demande d'accès à un service sous le contrôle de l'élément prédéfini de contrôle de licence de surcharge si l'équipement de communication remplit les conditions de fonctionnement, le procédé comprend en outre :
le jugement, par l'équipement de communication, du fait de savoir si l'élément prédéfini de contrôle de licence de surcharge possède une capacité d'élément de contrôle de licence de surcharge ;
dans lequel l'acceptation de la demande d'accès à un service sous le contrôle de l'élément prédéfini de contrôle de licence de surcharge si l'équipement de communication remplit les conditions de fonctionnement comprend :
l'acceptation de la demande d'accès à un service sous le contrôle de l'élément de contrôle de licence de surcharge si l'équipement de communication remplit les conditions de fonctionnement et si l'élément prédéfini de contrôle de licence de surcharge possède la capacité d'élément de contrôle de licence de surcharge.

5. Procédé selon la revendication 4, dans lequel : après l'acceptation de la demande d'accès à un service sous le contrôle de l'élément prédéfini de contrôle de licence de surcharge si l'équipement de communication remplit les conditions de fonctionnement et si l'élément prédéfini de contrôle de licence de surcharge possède la capacité d'élément de contrôle de licence de surcharge, le procédé comprend en outre :
la réduction, par l'équipement de communication, de la capacité d'élément de contrôle de licence de surcharge de l'élément prédéfini de contrôle de licence de surcharge.

6. Procédé selon l'une quelconque des revendications 3-5, dans lequel : avant le jugement du fait de savoir si l'équipement de communication remplit les conditions de fonctionnement de la licence de surcharge, le procédé comprend en outre :
la configuration, par l'équipement de communication, des conditions de fonctionnement.

7. Procédé selon l'une quelconque des revendications 1-5, dans lequel : si la surcharge est détectée, le procédé comprend en outre :
le déclenchement, par l'équipement de communication, d'une alarme de licence de surcharge.

8. Produit de programme informatique, dans lequel : le produit de programme informatique comprend des codes de programmes informatiques ; lorsqu'il sont exécutés par un ordinateur, les codes de programmes informatiques amenant l'ordinateur à mettre en oeuvre toutes les étapes selon l'une quelconque des revendications 1-7.

9. Appareil de gestion de la surcharge d'un équipement de communication, comprenant :
une unité de réception (401), configurée pour recevoir une demande d'accès à un service ;
une unité de détection (402), configurée pour détecter si une surcharge se produit après que l'unité de réception (401) a reçu la demande d'accès à un service ; et
une unité de contrôle (403), configurée pour accepter la demande d'accès à un service sous le contrôle d'un élément prédéfini de contrôle de licence de surcharge si l'unité de détection (402) détecte la surcharge, dans lequel l'élément prédéfini de contrôle de licence de surcharge est un compte de surcharge, un nombre de jours de pointe du service, un nombre de pics de service, ou un temps de surcharge ;
dans lequel l'unité de détection (402) configurée pour détecter si une surcharge se produit est :
configurée pour détecter si une éventuelle capacité libre de licences ordinaires est encore disponible pour accepter la demande d'accès à un service.

10. Appareil selon la revendication 9, comprenant en outre :
une unité d'ajustement (503), configurée pour ajuster des paramètres de configuration afin de satisfaire aux exigences de la demande d'accès à un service après que l'unité de détection (502) a détecté la surcharge ;
dans lequel l'unité de contrôle (504) est configurée pour accepter la demande d'accès à un service sous le contrôle de l'élément prédéfini de contrôle de licence de surcharge après que l'unité d'ajustement (503) a ajusté les paramètres de configuration.

11. Appareil selon la revendication 9, comprenant en outre :
une unité de jugement, configurée pour juger si l'équipement de communication remplit des conditions de fonctionnement d'une licence de surcharge après que l'unité de détection a détecté la surcharge, dans lequel la licence de surcharge correspond à l'élément prédéfini de contrôle de licence de surcharge ;
dans lequel l'unité de contrôle est configurée pour accepter la demande d'accès à un service sous le contrôle de l'élément prédéfini de contrôle de licence de surcharge si l'unité de jugement détermine que l'équipement de communication remplit les conditions de fonctionnement de la licence de surcharge.

12. Appareil selon la revendication 11, dans lequel :
l'unité de jugement est en outre configurée pour juger si l'élément prédéfini de contrôle de licence de surcharge possède une capacité d'élément de contrôle de licence de surcharge s'il est déterminé que l'équipement de communication remplit les conditions de fonctionnement ; et
l'unité de contrôle est configurée pour accepter la demande d'accès à un service sous le contrôle de l'élément prédéfini de contrôle de licence de surcharge si l'unité de jugement détermine que l'élément prédéfini de contrôle de licence de surcharge possède la capacité d'élément de contrôle de licence de surcharge.

13. Appareil selon la revendication 12, comprenant en outre :
une unité de contrôle de capacité (607), configurée pour réduire la capacité d'élément de contrôle de licence de surcharge de l'élément prédéfini de contrôle de licence de surcharge après que l'unité de contrôle (606) a accepté la demande d'accès à un service sous le contrôle de l'élément prédéfini de contrôle de licence de surcharge.

14. Appareil selon l'une quelconque des revendications 11-13, comprenant en outre :
une unité de configuration (601), configurée pour configurer les conditions de fonctionnement de la licence de surcharge avant que l'unité de jugement (604) juge si l'équipement de communication remplit les conditions de fonctionnement.

15. Appareil selon l'une quelconque des revendications 9-13, comprenant en outre :
une unité de déclenchement (608), configurée pour déclencher une alarme de licence de surcharge après que l'unité de détection (603) a détecté la surcharge.
